# EUROPÄISCHE PATENTSCHRIFT

(11) **EP 3 345 298 B1**
(45) Veröffentlichungstag und Bekanntmachung des Hinweises auf die Patenterteilung: **13.01.2021**
(21) Anmeldenummer: 16758208.9
(22) Anmeldetag: 01.09.2016
(51) Int. Cl.: H02P 6/00, A47J 43/07

(54) **HANDGEHALTENES ELEKTRISCH ANGETRIEBENES HAUSHALTSGERÄT MIT MODIAUSWAHL**
HAND-HELD ELECTRICALLY DRIVEN DOMESTIC APPLIANCE WITH MODE SELECTION
APPAREIL ÉLECTROMÉNAGER TENU EN MAIN AVEC SÉLECTION DE MODES

(30) Priorität: 01.09.2015 DE 102015216678
(43) Veröffentlichungstag der Anmeldung: 11.07.2018
(73) Patentinhaber: De'Longhi Braun Household GmbH, 63263 Neu-Isenburg (DE)
(72) Erfinder: SCHRÖDER, Christian, 63456 Hanau (DE); KLEEMANN, Christof, 61350 Bad Homburg (DE); BUHL-REMMEL, Sabine, 65824 Schwalbach am Taunus (DE); EISSENGARTHEN, Christoph, 55299 Nackenheim (DE)
(74) Vertreter: Hoffmann Eitle
(86) Internationale Anmeldenummer: PCT/EP2016/070594
(87) Internationale Veröffentlichungsnummer: WO 2017/037160

(56) Entgegenhaltungen:
- EP-A1- 0 723 333
- DE-A1- 19 742 916
- DE-A1-102008 040 935
- DE-U1- 20 180 402
- DE-U1- 29 719 596
- US-A- 5 347 205
- US-A1- 2013 214 716
- US-A1- 2014 226 436

## Beschreibung

### Technisches Gebiet

Die vorliegende Erfindung betrifft ein handgehaltenes elektrisches Haushaltsgerät.

### Hintergrund der Erfindung

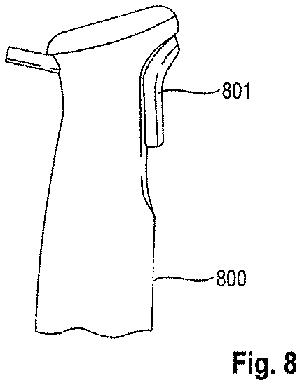

Handgehaltene elektrisch angetriebene Haushaltsgeräte, wie z.B. Stabmixer, finden heutzutage in vielen Haushalten und Küchen Einsatz. Ein derartiger Stabmixer, wie z.B. der in EP 2 571 037 A1 beschriebene Stabmixer, verfügt im Allgemeinen über einen Geschwindigkeitsschalter zum stufenlosen Regeln der Geschwindigkeit des Motors, der den Stabmixer antreibt. Mittels des Geschwindigkeitsschalters bzw. -reglers, im Folgenden allgemein als Betätigungselement bezeichnet, kann die Geschwindigkeit bzw. die Drehzahl des Motors vom vollständigen Stillstand bis zu einer maximalen Drehzahl des Motors geregelt werden. Die Regelung erfolgt entsprechend des Verfahrwegs bzw. Betätigungswegs, wie z.B. der Eindrücktiefe des Geschwindigkeitsschalters, oder der auf den Geschwindigkeitsschalter ausgeübten Kraft, meist stufenlos. Ein Stabmixer des Stands der Technik ist abschnittsweise in Fig. 8 gezeigt, wobei das Bezugszeichen 801 den Geschwindigkeitsschalter des Stabmixers 800 darstellt.

Ein derartiges handgehaltenes elektrisch angetriebenes Haushaltsgerät, wie z.B. der Stabmixer des Stands der Technik, weist ein Problem auf, dass der Betätigungsweg (z.B. die Eindrücktiefe) des Geschwindigkeitsschalters relativ klein ist, aber dennoch ein großer Drehzahlbereich des Motors von null bis zur Maximalgeschwindigkeit ansteuerbar/regelbar sein muss. Dies macht es für den Benutzer des Gerätes schwierig, eine bestimmte Ansteuerung, wie z.B. eine bestimmte Geschwindigkeit, anzuwählen und zu halten, welche der Benutzer präferiert oder welche für eine bestimmte Anwendung oder Verarbeitung ideal ist.

Ein weiteres Problem konventioneller handgehaltener elektrisch angetriebener Haushaltsgeräte, wie z.B. Stabmixer, liegt darin, dass sich die Geschwindigkeit bei einer konstanten Position des Betätigungselement (z.B. einer konstanten Eindrücktiefe) durch eine Veränderung der Last durch das zu verarbeitende Gut (wie z.B. das zu zerkleinernde Lebensmittel) ändern kann, was zu einem ungünstigen Verarbeitungsergebnis führen kann. Eine derartige Laständerung kann z.B. bei der Verarbeitung von pastösen, klebrigen und ballbildenden Lebensmitteln wie Teig, Honig, dicken Suppen sowie bei Food Processor Anwendungen mit ungleichmäßiger Lebensmittelzuführung (z.B. Scheiben schneiden, Raspeln, Entsaften, Wolfen) hervorgerufen werden, bei welchen ein benötigtes Anlaufdrehmoment sehr hoch ist und das benötigt Drehmoment nachfolgend stark abnimmt.

DE 197 42 916 A1 betrifft eine Ansteuerung für einen an einem Spannungsnetz mit zwei Netzstromanschlüssen betriebenen, insbesondere in eine bewegbare und/oder handgeführte Maschine integrierten Elektromotor mit zumindest zwei Netzstromanschlussklemmen. Dabei wird zur Vermeidung einer Überlastung des Elektromotors und zur Reduzierung des fertigungstechnischen Aufwands sowie des benötigten Einbauplatzbedarfs eine Ansteuerung mit zwei über zwei Netzstromanschlüsse verbundenen Netzstromanschussklemmen, einem Microcontroller und einem Ansteuerungsschalter geschaffen.

DE 10 2008 040935 A1 zeigt ein Küchengerät mit einem elektrischen Motor, dessen Drehzahl veränderbar ist, zum Antreiben eines Bearbeitungswerkzeugs, wobei das Küchengerät Erfassungsmittel zum Erfassen der Drehzahl des Motors und mindestens ein von dem Erfassungsmittel ansteuerbares optisches Anzeigeelement zum Anzeigen einer Drehzahl des Motors umfasst. Das optische Anzeigeelement ist so von dem Erfassungsmittel ansteuerbar, dass ein von null verschiedene Intensität des Anzeigeelements mindestens innerhalb eines dem optischen Anzeigeelement zugeordneten Drehzahlbereichs als Funktion der Motordrehzahl variiert.

### Aufgabe der Erfindung

Somit ist es wünschenswert, ein verbessertes handgehaltenes elektrisch angetriebenes Haushaltsgerät bereitzustellen, das mindestens eines der obigen Probleme löst und zu einer verbesserten Ansteuerung des handgehaltenen elektrisch angetriebenen Haushaltsgeräts bzw. dessen Motors führt.

### Lösung der Aufgabe

Eine Lösung dieser Aufgabe wird durch das handgehaltene elektrisch angetriebene Haushaltsgerät mit den Merkmalen des Anspruchs 1 bzw. das Verfahren nach Anspruch 7 bereitgestellt.

Dieses handgehaltene elektrisch angetriebene Haushaltsgerät umfasst einen elektrischen Motor zum Antreiben des Haushaltsgeräts, eine Steuereinheit zur Steuerung des Motors, ein erstes Betätigungselement zur Ausgabe, an die Steuereinheit, eines ersten Steuersignals zum Auswählen eines Motorsteuermodus, ein zweites Betätigungselement zur Ausgabe, an die Steuereinheit, eines zweiten Steuersignals, wobei die Steuereinheit eingerichtet ist, basierend auf dem ersten Steuersignal einen Motoransteuermodus aus vorgegebenen Motoransteuermodi auszuwählen, und die Steuereinheit eingerichtet ist, ein an den Motor auszugebendes Motoransteuersignal basierend auf dem ausgewählten Motoransteuermodus und dem zweiten Steuersignal zu bestimmen.

Somit kann die Ansteuerung des Motors durch das Motoransteuersignal, wie z.B. die anzulegende Spannung, das Drehmoment oder die zu verwendende Drehzahl in Abhängigkeit der Auswahl eines bestimmten Motoransteuermodus erfolgen.

Durch die Bereitstellung verschiedener Motoransteuermodi, wird hierbei ermöglicht, die Drehzahl oder die anzulegende Spannung an den Motor präziser in Abhängigkeit der Bedürfnisse des Benutzers anzusteuern.

Die Motoransteuerungsmodi definieren hierbei z.B. verschiedene Verläufe bzw. Ansteuerprofile bzw. Verhältnisse zwischen dem Betätigungsweg des zweiten Betätigungselements und einem Ansteuerwert (wie einer auszugebenden Spannung oder einer Drehzahl des Motors bzw. einer Drehzahl einer mit den Klingen des Stabmixers verbundenen Achse) oder auch unterschiedliche Maximal-Ansteuerwerte und/oder Minimal-Ansteuerwerte.

Ein Motoransteuermodus mit einem entsprechenden Ansteuerprofil, welches für den jeweiligen Arbeitsvorgang oder z.B. für das jeweilige zu verarbeitende Lebensmittel am besten geeignet ist, kann somit durch den Benutzer ausgewählt werden, was eine präzisere Ansteuerung bzw. Regelung des Motors ermöglicht.

Entsprechend kann mittels des handgehaltenen elektrisch angetriebenen Haushaltsgeräts eine präzisere Ansteuerung bzw. Regelung mittels des zweiten Betätigungselements durch Auswahl eines entsprechenden Motoransteuermodus ermöglicht werden. Dies vereinfacht einerseits die Benutzung und führt andererseits zu einem verbesserten Verarbeitungsergebnis.

Ein entsprechendes Verfahren zum Steuern eines handgehaltenen elektrisch angetriebenen Haushaltsgeräts umfasst die Schritte Empfangen eines ersten Steuersignals zum Auswählen eines Motorsteuermodus von einem ersten Betätigungselement; Empfangen eines zweiten Steuersignals von einem zweiten Betätigungselement; Auswählen eines Motoransteuermodus aus vorgegebenen Motoransteuermodi basierend auf dem ersten Steuersignal; Bestimmen eines an einen elektrischen Motor auszugebenden Motoransteuersignals basierend auf dem ausgewählten Motoransteuermodus und dem zweiten Steuersignal.

### Weiterbildung und Vorteile davon

Bevorzugt ist das von dem zweiten Betätigungselement ausgegebene zweite Steuersignal abhängig von einem Betätigungsweg des zweiten Betätigungselements
Dies ermöglicht die Ausgabe eines Signals entsprechend des Betätigungswegs und somit z.B. entsprechend der Eindrücktiefe oder der ausgeübten Kraft des zweiten Betätigungselements. Der Betätigungsweg bzw. das zugehörige Signal kann einerseits kontinuierlich, stufenlos oder andererseits mehrstufig (bevorzugt mehr als zweistufig) ausgebildet sein.

Ferner bevorzugt umfassen die vorgegebenen Motoransteuermodi zumindest einen von: einem ersten Motoransteuermodus mit einem ersten Maximal-Ansteuerwert zur Ansteuerung des elektrischen Motors, wobei die Steuereinheit eingerichtet ist, das an den Motor auszugebende Motoransteuersignal basierend auf dem zweiten Steuersignal und dem ersten Maximal-Ansteuerwert zu bestimmen; einem zweiten Motoransteuermodus mit einem zweiten Maximal-Ansteuerwert zur Ansteuerung des elektrischen Motors, verschieden von dem ersten Maximal-Ansteuerwert, wobei die Steuereinheit eingerichtet ist, das an den Motor auszugebende Motoransteuersignal basierend auf dem zweiten Steuersignal und dem zweiten Maximal-Ansteuerwert zu bestimmen; und/oder einem ersten Pulsmodus mit einer ersten Pulsform des Ansteuersignals zur Ansteuerung des elektrischen Motors, wobei die Steuereinheit eingerichtet ist, das an den Motor auszugebende Motoransteuersignal basierend auf dem zweiten Steuersignal und der ersten Pulsform zu bestimmen.

Mit der Bereitstellung von einem oder mehreren der oben angegebenen Ansteuermodi, bevorzugt zwei oder mehr, wird die Steuerung durch den Benutzer weiter verbessert. Hierbei können z.B. ein erster und ein zweiter Ansteuermodus bereitgestellt werden, welche sich jeweils im Maximalwert des Ansteuerwerts (Maximal-Ansteuerwert) unterscheiden. Der Maximalwert kann hierbei z.B. ein Maximalwert einer anzulegenden Spannung, ein Maximalwert eines Drehmoments oder ein Maximalwert einer Drehzahl des Motors (oder einer Achse des Motors) sein. Demzufolge kann ein derartiger Modus z.B. durch Wahl eines niedrigen Maximalwerts für niedrige Drehzahlen ausgelegt sein, um ein langsames Zerkleinern bei gleichzeitiger hoher Präzision der Drehzahlauswahl zu ermöglichen, da der Betätigungsweg des zweiten Betätigungselements auf einen geringeren Wertebereich des Ansteuerwerts abgebildet werden muss. Die Bereitstellung eines Pulsmodus (oder mehrerer verschiedener Pulsmodi) bringt weitere Vorteile bei der Verarbeitung bestimmter Lebensmittel (z.B. gleichmässigeres Mahlbild) und ermöglicht eine weitere Verbesserung des Verarbeitungsergebnisses. Die vorliegenden Pulsprogramme bzw. Pulsformen können daher auch einen zeitlich unstetigen Verlauf aufweisen und unterscheiden sich von stetigen Kurvenverläufen mit definierter maximaler Leistung.

Ferner bevorzugt ist der Maximal-Ansteuerwert eine maximal anzulegende Spannung, ein Maximaldrehmoment oder eine Maximaldrehzahl des Motors.

Der gewählte Maximalwert kann sich entsprechend auf die anzulegende Spannung, das Drehmoment oder die Drehzahl beziehen. Bei Wahl des Maximalwerts als eine bestimmte Maximaldrehzahl wird die Ansteuerung bzw. Regelung des Motors, auch bei einer Änderung z.B. der Konsistenz des zu bearbeitenden Guts, weiter verbessert, da bei einer Änderung der Last eine bestimmte Maximaldrehzahl nicht überschritten wird. Selbiges gilt entsprechend für andere Lebensmittel bei der Verwendung eines Maximaldrehmoments oder der anzulegenden Spannung.

Ferner bevorzugt ist die Steuereinheit eingerichtet, im Pulsmodus die Pulsbreite in Abhängigkeit vom Betätigungsweg des zweiten Betätigungselements zu regeln, zwischen einem Auszustand und einer Ansteuerung mit der Pulsform entsprechend der Betätigung des zweiten Betätigungselements zu schalten, eine Amplitude der Pulsform in Abhängigkeit vom Betätigungsweg des zweiten Betätigungselements zu regeln, eine Frequenz der Pulsform in Abhängigkeit vom Betätigungsweg des zweiten Betätigungselements zu regeln, das Pulsverhältnisses, On/Off, der Pulsform in Abhängigkeit vom Betätigungsweg des zweiten Betätigungselements zu regeln; oder eine Kombination hieraus entsprechend des Betätigungsweges zu regeln.

Durch die Ansteuerung eines geeigneten Parameters für die Verarbeitung kann das Verarbeitungsergebnis je nach zu verarbeitendem Lebensmittel weiter verbessert werden.

Ferner bevorzugt ist die Pulsform des Pulsmodus eines von einem Sägezahnpuls (ggf. mit verschiedenen Anstiegsraten, Steigungen), einem Sinuspuls, einem Rechteckpuls, einem Trapezpuls, oder einer beliebigen Pulsform.

Entsprechend des gewählten Lebensmittels oder des gewünschten Verarbeitungsergebnisses bieten die verschiedenen Pulsformen verbesserte Ergebnisse der Verarbeitung des Verarbeitungsguts.

Ferner bevorzugt ist im ersten bzw. zweiten Motoransteuermodus ein Zusammenhang zwischen dem zweiten Steuersignal und einem Ansteuerwert zwischen einem Minimalwert und dem ersten bzw. zweiten Maximalwert eines von: einem linearen Zusammenhang; einem exponentiellen Zusammenhang; einem stufenartigen Zusammenhang; einem beliebig kurvenförmigen Zusammenhang.

Um eine genaue Ansteuerung eines Ansteuerspannungsbereichs zu ermöglichen, ggf. bei gleichzeitiger Ermöglichung der Ausnutzung des kompletten Ansteuerbereichs, können verschiedene Verläufe der Ansteuerung und somit verschiedene Zusammenhänge zwischen dem zweiten Steuersignal und einem Ansteuerwert zwischen dem Minimal- und dem Maximal-Ansteuerwert des jeweiligen Modus ausgewählt werden.

Ferner bevorzugt umfasst das Haushaltsgerät eine Messeinrichtung zum Messen der Drehzahl des Motors, wobei die Steuereinheit eingerichtet ist, das an den Motor auszugebende Motoransteuersignal ferner basierend auf der gemessenen Drehzahl des Motors zu bestimmen.

Dies ermöglicht eine Steuerung bzw. Regelung des Motors anhand der Drehzahl des Motors bzw. z.B. anhand der Drehzahl der mit den Messern des Stabmixers verbundenen Achse und somit eine Verhinderung von Schwankungen aufgrund der Veränderung der Last, welche z.B. durch eine Veränderung der Konsistenz des zu verarbeitenden Gutes bzw. Lebensmittels hervorgerufen wird.

Gleichzeit wird eine genauere Ansteuerung des Motors durch den Benutzer ermöglicht, da ein bestimmtes Steuersignal bzw. ein bestimmter Wert des Steuersignals und somit ein bestimmter Betätigungsweg des zweiten Betätigungselements mit einer bestimmten Drehzahl assoziiert ist, so dass eine bestimmte Drehzahl gezielt angesteuert werden kann.

Bevorzugt umfasst ein entsprechendes Verfahren ferner den Schritt: Messen, durch eine Messeinrichtung, der Drehzahl des Motors, wobei im Schritt des Bestimmens das an den Motor auszugebende Motoransteuersignal ferner basierend auf der gemessenen Drehzahl des Motors bestimmt wird.

### Kurze Beschreibung der Zeichnungen

In den Zeichnungen zeigt:
- Fig. 1:: das allgemeine Prinzip des erfindungsgemäßen handgehaltenen elektrisch angetriebenen Haushaltsgeräts;
- Fig. 2:: mögliche Verläufe der Ansteuerung für verschiedene Ansteuermodi;
- Fig. 3:: mögliche Verläufe der Ansteuerung für Pulsmodi;
- Fig. 4:: einen Zusammenhang des Betätigungswegs zur Pulsbreite in einem Ansteuermodus;
- Fig. 5:: einen Zusammenhang des Betätigungswegs zur Amplitude in einem Ansteuermodus;
- Fig. 6:: eine weitere Ausführungsform des erfinderischen handgehaltenen elektrisch angetriebenen Haushaltsgeräts;
- Fig. 7:: eine abschnittsweise Darstellung des erfinderischen Stabmixers;
- Fig. 8:: eine abschnittsweise Darstellung des Stabmixers des Standes der Technik;

### Grundprinzip der Erfindung

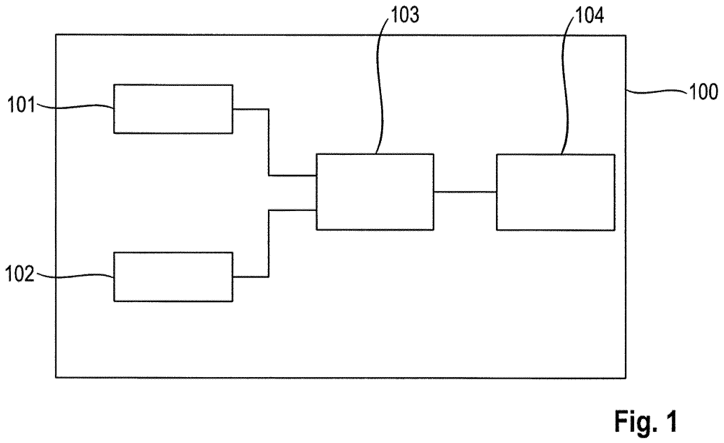

In Fig. 1 ist das Grundprinzip der Erfindung dargestellt. Anhand dieser Figur soll im Folgenden das Grundprinzip näher erläutert werden.

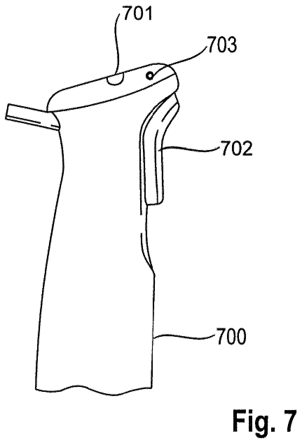

Ein handgehaltenes elektronisch angetriebenes Haushaltsgerät 100, wie z.B. ein Stabmixer, umfasst ein erstes Betätigungselement 101, ein zweites Betätigungselement 102, eine Steuereinheit 103 sowie einen Motor 104. Das erste Betätigungselement 101 dient der Ausgabe eines ersten Steuersignals zum Auswählen eines Motorsteuermodus. Als derartiges erstes Steuerelement ist z.B. ein Taster, oder ein Schalter mit mehreren Positionen zur Auswahl mehrerer Modi verwendbar. Eine mögliche Ausgestaltung des ersten Betätigungselements 701 lässt sich der Fig. 7 entnehmen.

Ein Steuersignal in Form eines Ausgabesignals des ersten Betätigungselements wird an die Steuereinheit 103 ausgegeben, welche eine entsprechende Steuerung bzw. Regelung, wie später beschrieben, durchführt.

Das zweite Betätigungselement, welches ein zweites Steuersignal ausgibt, kann z.B. als Taster ausgebildet sein, welcher ein Signal entsprechend des Betätigungswegs bzw. des Verfahrwegs des Tasters ausgibt. Der Betätigungsweg bzw. Verfahrweg kann hierbei z.B. die Eindrücktiefe des Tasters oder die auf den Taster ausgeübte Kraft sein. Ferner kann der Betätigungsweg auch z.B. die Neigung oder Winkelstellung des Betätigungselements oder auch der Verschiebeweg eines Sliderschalters sein. Ein derartiges Signal, welches abhängig von dem Betätigungsweg ist, kann kontinuierlich oder alternativ auch stufenweise ausgebildet sein, wobei eine derartige stufenweise Ausbildung bevorzugt mehr als zwei Stufen aufweist. Weiter bevorzugt kann der Betätigungsweg des Tasters kontinuierlich und alternativ auch stufenlos eingestellt werden, und ein dem Betätigungsweg entsprechendes Signal ausgegeben werden.

Eine mögliche Ausgestaltung des zweiten Betätigungselements 702 lässt sich der Fig. 7 entnehmen.

Die Steuereinheit 103 empfängt die Steuersignale des ersten und zweiten Betätigungselements und verwendet diese zur Bestimmung eines an den Motor auszugebenden Motoransteuersignals. Hierzu wird in der Steuereinheit 103 mittels des durch das erste Betätigungselement ausgegebenen Steuersignals zuerst ein Motorsteuermodus aus einer Vielzahl von verschiedenen Motoransteuermodi ausgewählt. Eine derartige Auswahl kann z.B. einerseits durch mehrfaches Drücken des ersten Betätigungselements bis zum Erreichen des gewünschten Motorsteuermodus oder entsprechend der ausgewählten Position eines Schiebeschalters erfolgen.

Eine Ausgabe eines aktuell ausgewählten Modus an den Benutzer kann durch eine (in Fig. 1 nicht gezeigte) Anzeige z.B. in Form eines Displays, eines akustischen Signals oder einer oder mehrerer LEDs erfolgen. Eine mögliche Ausgestaltung als einzelne LED 703 lässt sich der Fig. 7 entnehmen. Der ausgewählte Modus lässt sich hier z.B. durch mehrfaches Blinken der LED entsprechend der Nummer des ausgewählten Modus oder auch unterschiedliche Farben darstellen.

Jeder Motoransteuermodus weißt hierbei einen anderen Zusammenhang bzw. eine andere Abbildung bzw. Assoziation des zweiten Steuersignals (bzw. dessen Werts) auf bzw. mit einem Ansteuerwert auf.

Diese Motoransteuermodi können sich hierbei beispielweise im Profil bzw. Profilverlauf der Abbildung des zweiten Steuersignals (bzw. dessen Werts) auf einen Ansteuerwert oder auch in einem anderen Minimal- oder Maximal-Ansteuerwert unterscheiden.

Wurde mittels des ersten Betätigungselements ein entsprechender Motoransteuermodus aus einer Vielzahl von Motoransteuermodi ausgewählt, so wird anhand dieses Motoransteuermodus und des von dem zweiten Betätigungselement empfangenen Steuersignals eine Bestimmung vorgenommen.

Hierbei wird mittels des über das Steuersignal angezeigten Betätigungswegs (bzw. Betätigungswegposition) und des ausgewählten Motoransteuermodus, welcher einen Zusammenhang zwischen dem Betätigungsweg und einem Ansteuerwert zur Motoransteuerung bzw. Regelung des Motors 104 (Ansteuerwert) herstellt, ein Ansteuerwert bestimmt.

Mittels des über den gewählten Motoransteuermodus und den Betätigungsweg bestimmten Ansteuerwerts erfolgt nun eine Bestimmung des an den Motor auszugebenden Motoransteuersignals. Hierbei bestimmt die Steuereinheit ein Signal, welches zur Erreichung des gewünschten Ansteuerwerts an den Motor anzulegen ist bzw. welches zu einer dem gewünschten Ansteuerwert entsprechenden Steuerung bzw. Regelung des Motors führt.

Anders gesagt wird ein Motoransteuersignal derart bestimmt, dass der Motor entsprechend des bestimmten Ansteuerwerts arbeitet.

Unter einem Ansteuerwert ist hierbei z.B. eines von einer Drehzahl, einem Drehmoment, einer an den Motor anzulegenden Spannung, oder einer Leistung zu verstehen. Dem Fachmann sind weitere Ansteuerwerte bzw. Ansteuerparameter bekannt, die entsprechend angewendet werden können.

Das Motoransteuersignal kann wiederum z.B. die an den Motor anzulegende Spannung sein. Jedoch ist ein Motoransteuersignal nicht hierauf beschränkt und es kann sich hierbei auch um ein Steuersignal für eine Phasenanschnittsteuerung, Steuerung des Stroms, der Frequenz, der Erregerfeldstärke, der Feldfrequenz etc. handeln. Dem Fachmann sind hierbei verschiedene Möglichkeiten der Ansteuerung eines Motors bekannt, um einen gewünschten Ansteuerwert (z.B. eine gewünschte Drehzahl) durch geeignete Ansteuerung des Motors (z.B. Anlegen einer geeigneten Spannung, Phasenanschnittsteuerung, Steuerung des Stroms, der Frequenz, der Erregerfeldstärke, der Feldfrequenz etc.) zu erzielen.

Das entsprechende Motoransteuersignal wird an den Motor des handgehaltenen elektrisch angetriebenen Haushaltsgeräts bzw. an eine zur Spannungsregelung vorgesehene Einheit ausgegeben.

In einem derartigen Motoransteuermodus wird der Motor durch die Steuereinheit derart angesteuert, dass der Motor entsprechend des Ansteuersignals arbeitet
Die zu verwendenden Profile und eine detaillierte Beschreibung möglicher Ansteuermodi und deren Ausgestaltung, werden im Folgenden genauer erläutert.

Mittels der Auswahl eines Ansteuermodus aus mehreren Ansteuermodi wird eine genaue und zuverlässige Steuerung bzw. Regelung des Motors bzw. des Motoransteuersignals trotz des geringen Betätigungswegs bzw. Verfahrwegs des zweiten Betätigungselements ermöglicht.

### Ausführungsformen der Erfindung

Bevorzugte Ausführungsformen der vorliegenden Erfindung werden nachfolgend ausführlich unter Bezugnahme auf die begleitenden Zeichnungen beschrieben. Dabei sind in den verschiedenen Zeichnungen gleiche oder entsprechende Bauteile mit jeweils den gleichen oder ähnlichen Bezugszeichen bezeichnet.

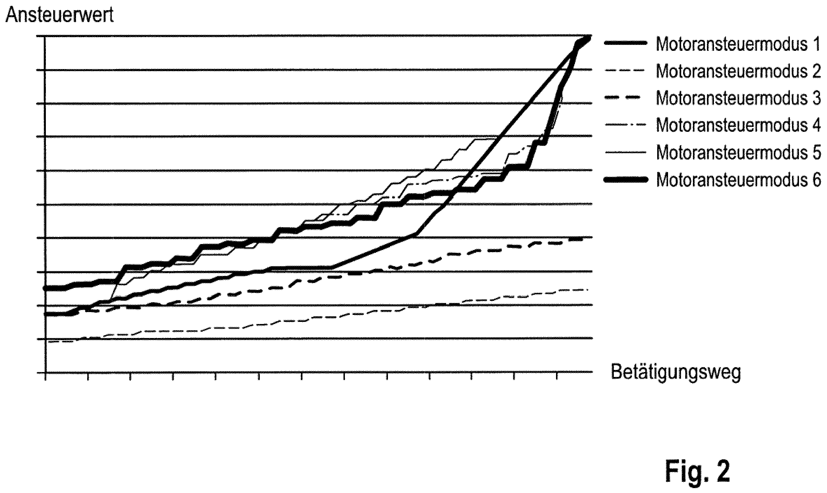

Fig. 2 zeigt hierbei beispielhaft verschiedene Verläufe möglicher Motoransteuermodi. Auf der X-Achse ist der Betätigungsweg aufgetragen. Auf der Y-Achse ist der Ansteuerwert aufgetragen. Beide Achsen sind einheitenlos dargestellt. Wie bereits erwähnt kann der Betätigungsweg auf der X-Achse hierbei z.B. die Eindrücktiefe oder die ausgeübte Kraft in einer geeigneten Einheit oder prozentual zu einem Maximalwert darstellen. Selbiges gilt für den auf der Y-Achse aufgetragenen Ansteuerwert. Auch dieser kann in einer geeigneten Einheit oder prozentual zu einem Maximalwert aufgetragen sein.

Wie dem Diagramm der Fig. 2 beispielhaft zu entnehmen ist, unterscheiden sich die Motoransteuermodi z.B. in dem assoziierten Maximalwert eines Ansteuerwerts (Maximal-Ansteuerwert) zur Ansteuerung bzw. Regelung des Motors. Wie oben ausgeführt kann der assoziierte Maximalwert des Ansteuerwerts hierbei einerseits eine Maximaldrehzahl bzw. eine maximale Geschwindigkeit des Motors oder der verbundenen Achse oder ein Maximaldrehmoment sein. Andererseits kann der Maximalwert auch eine bestimmte Maximalspannung, die an den Motor anzulegen ist, oder einen sonstigen Ansteuerwert wie eine maximale Leistung, eine maximalen Strom oder ähnliches repräsentieren. Die Maximal-Ansteuerwerte können hierbei in einer geeigneten Einheit oder prozentual zu einem Referenzwert definiert sein. Der Maximal-Ansteuerwert kann hierbei, in einem zweiten Modus, der einem ersten Modus mit 100% folgt, auch bei einer reduzierten Maximaldrehzahl von 10% - 90%, bevorzugt 30% - 70% und bevorzugter 40% - 60% der Maximaldrehzahl liegen. Somit lässt sich über einen großen Ansteuerbereich die Drehzahl besser justieren.

Wie ferner erkennbar, können sich die verschiedenen Motoransteuermodi aber auch in ihrem Minimalwert unterscheiden, wobei ein erster Motoransteuermodus einen Minimalwert aufweist, der verschieden ist von dem Minimalwert eines zweiten Motoransteuermodus.

Ferner kann der Verlauf des Zusammenhangs zwischen dem Betätigungsweg, wie z.B. der Eindrücktiefe des Tasters oder der auf das zweite Betätigungselement ausgeübten Kraft, und einem zugehörigen Wert zwischen dem Minimalwert und dem Maximalwert (Ansteuerwert) und somit der Verlauf bzw. das Profil zwischen Minimalwert und Maximalwert zwischen den jeweiligen Motoransteuermodi unterschiedlich gestaltet sein.

So ist der Verlauf des als Motoransteuermodus 2 gekennzeichneten Motoransteuermodus in Fig. 2 z.B. annähernd linear. Annähernd linear kann hierbei in einer Ausgestaltung wie erkennbar auch eine stufenförmige Ausbildung umfassen, deren Näherung eine Gerade darstellt. Auch andere Profilverläufe, wie z.B. ein annähernd exponentieller Verlauf, wie stückweise im Motoransteuermodus 1, ist eine mögliche Ausgestaltung eines derartigen Profilverlaufs eines Motoransteuermodus. Auch Kombinationen zwischen linearen Verläufen und exponentiellen Verläufen oder ähnliches, wie als Motoransteuermodus 1 dargestellt, können ausgebildet werden.

Es ergeben sich somit je nach Profilverlauf verschiedene Zuordnungen bzw. Assoziationen des zweiten Steuersignals bzw. dessen Werte mit den möglichen Ansteuerwerten.

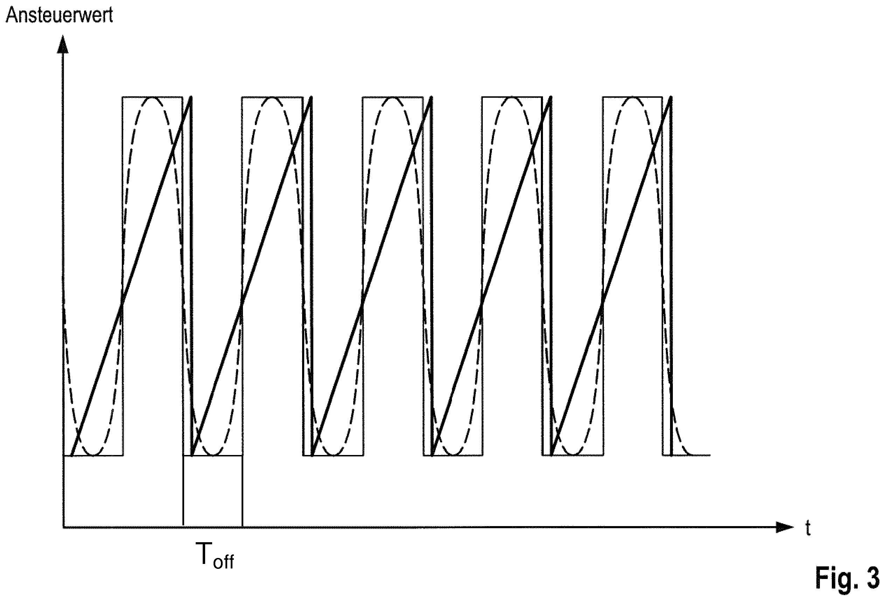

Weitere mögliche Ansteuermodi in Form von einem oder mehreren (unterschiedlich ausgebildeten) Pulsmodi sollen nun in Bezug auf Fig. 3 beschrieben werden.

In einem Pulsmodus weist der (gewünschte) Ansteuerwert über die Zeit einen pulsförmigen Verlauf auf. Entsprechend wird der Motor durch die Steuereinheit derart angesteuert, dass der Motor entsprechend des sich pulsförmig über die Zeit verändernden Ansteuerwerts arbeitet und ebenfalls einen pulsförmigen Verlauf über die Zeit aufweist.

Hierbei können ein oder mehrere Motoransteuermodi als Pulsmodi ausgebildet sein.

Wie beispielhaft der Fig. 3 zu entnehmen, kann ein derartiger Verlauf des Ansteuerwerts der Motoransteuerung bzw. Regelung, ein Rechteckverlauf bzw. -form (Rechteckpuls), ein Sägezahnverlauf (Sägezahnpuls), ein Sinusverlauf (Sinuspuls), ein Trapezverlauf (Trapezpuls) oder eine andere Pulsform sein. Dabei werden für ein handgehaltenes elektrisches Haushaltsgerät bevorzugt sehr lange Pausenzeiten Toff (AUS-Zeit) im Bereich von 50 ms - 2 s, bevorzugt 100 ms - 1 s, und beispielsweise 500ms verwendet, was sich wesentlich von einer normalen PWM-Ansteuerung unterscheidet, da der Motor hier zum stehen kommen kann. Ferner kann sich die AN-Zeit (Ton) von der Pausenzeit Toff unterscheiden, und die jeweiligen Intervallzeiten (Ton, Toff) sind durch das Betätigungselement einstellbar. Im Vergleich zu einer Ansteuerung bei Verwendung der maximalen Leistung von 100%, kann vorliegend bei einem Endwert der maximalen Leistung/Spannung bei beispielsweise 50 - 60% ein kleinerer Drehzahlbereich durch einen kompletten mechanischen Betätigungsweg abgedeckt werden, was zu einer besseren Justierbarkeit der Leistung/Drehzahl führt. Entsprechend ändert sich z.B. bei der Verwendung eines Rechteckverlaufs bzw. einer Rechteckform der Ansteuerwert zyklisch zwischen einem ersten Ansteuerwert und einem zweiten Ansteuerwert.

Die Verwendung einer derartigen Pulsform ist vorteilhaft für die Verarbeitung bestimmter Verarbeitungsgüter. So ist die Verwendung einer Pulsform z.B. bei harten Lebensmitteln, wie Nüssen, vorteilhaft, um ein gleichmäßiges Verarbeitungsergebnis zu erzielen. Ein nichtstetiger Pulsverlauf, der wie oben beschrieben beispielsweise rechteckförmig, sägezahnförmig, usw. sein kann, führt zu einer enormen Verbesserung des Schnittergebnisses.

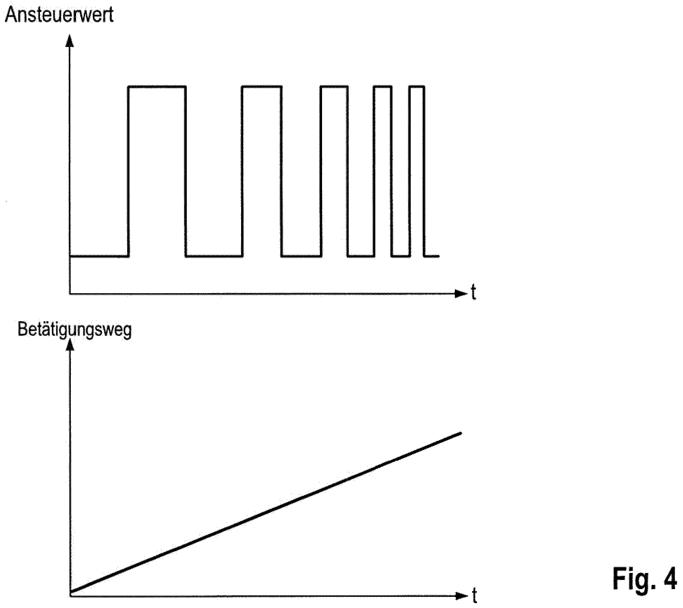

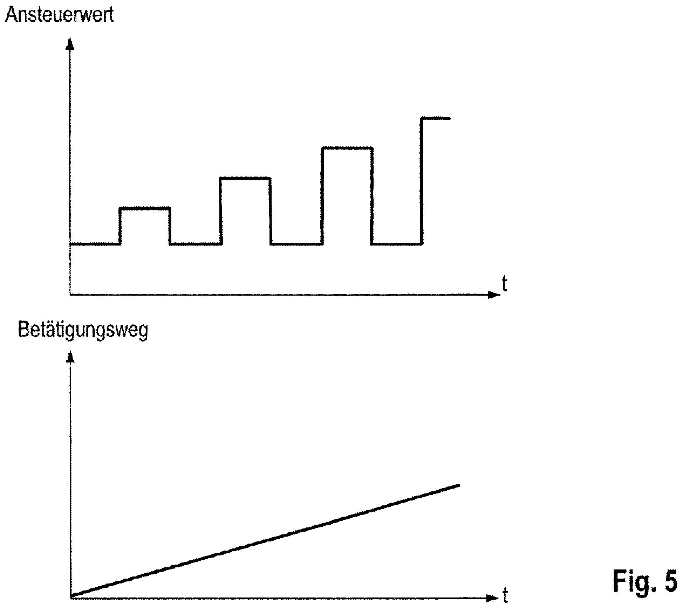

Mögliche Steuerungsverfahren der Pulsmodi sollen nun mit Hinblick auf Fig. 4 und 5 beschrieben werden. Bei einer ersten Ausgestaltung kann bei Auswahl eines Pulsmodus (ggf. aus mehreren möglichen Pulsmodi) durch Betätigung des zweiten Betätigungselements ein Ein- oder Ausschalten des Motors erfolgen. Somit dient das zweite Betätigungselement lediglich dem Ein- und Ausschalten des Motors, wobei die Parameter des Pulsmodus wie Amplitude, Frequenz und Ähnliches unabhängig vom Betätigungsweg des zweiten Betätigungselements sind.

In einem weiteren Beispiel kann über den Betätigungsweg des zweiten Betätigungselements die Frequenz bzw. die Pulsbreite des Pulses gesteuert werden. Wie der Fig. 4 zu entnehmen ist, wird entsprechend bei einem Erhöhen des Betätigungswegs bzw. dessen Werts die Pulsbreite verringert oder die Frequenz des Pulses erhöht. Somit ändert sich der Ansteuerwert mit zunehmender Geschwindigkeit von einem ersten Wert zu einem zweiten Wert und umgekehrt.

Dies ermöglicht dem Benutzer ein Einstellen des Ansteuerwerts wie z.B. der Zerkleinerungsgeschwindigkeit über das zweite Betätigungselement mit lediglich einem Betätigungselement bei gleichzeitigem Erhalt des Pulsmodus.

In einem weiteren Beispiel kann, wie in Fig. 5 gezeigt, das zweite Betätigungselement verwendet werden, um die Amplitude zu steuern. In Fig. 5 ist beispielhaft ein Pulsmodus gezeigt, bei welchem durch Erhöhen des Betätigungswegs bzw. dessen Werts der Maximal-Ansteuerwert des Pulsmodus erhöht wird. Jedoch ist dieses Steuerungsverfahren nicht hierauf beschränkt und es kann die Pulsamplitude auch durch eine Anpassung des oberen und unteren Wertes des Pulses geändert werden.

Für den Fachmann ist ersichtlich, dass sich die Ausbildung der Pulsmodi nicht auf die Änderung der Amplitude, der Pulsbreite oder der Frequenz beschränkt, sondern auch eine Steuerung/Regelung eines On/Off Tastverhältnisses und eine beliebige Kombination aus den genannten Steuerungen in Abhängigkeit des zweiten Steuersignals möglich ist.

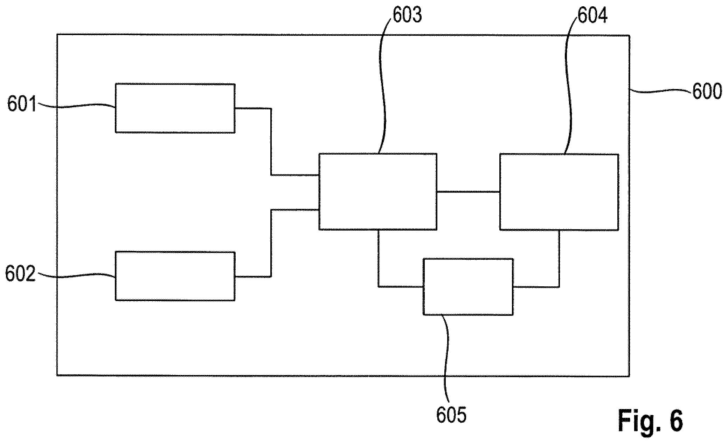

Die zweite Ausführungsform der vorliegenden Erfindung soll nun im Folgenden mit Bezug auf Fig. 6 beschrieben werden. Entsprechend der ersten Ausführungsform umfasst das handgehaltene elektrisch angetriebene Haushaltsgerät 600 der zweiten Ausführungsform ein erstes Betätigungselement 601, ein zweites Betätigungselement 602, eine Steuereinheit 603 sowie einen Motor 604. Die zweite Ausführungsform der Fig. 6 unterscheidet sich von der Ausführungsform der Fig. 1 dadurch, dass sie ferner eine Messeinrichtung 605 zum Messen der Drehzahl des Motors aufweist.

Die Messeinrichtung 605 ist derart ausgebildet, um die Drehzahl des Motors zu messen. Die Messung der Drehzahl des Motors umfasst hierbei auch die Messung der Drehzahl einer daran anschließenden Achse wie z.B. zur Verbindung der Klingen des Stabmixers mit dem Motor. Ein Signal der Messeinrichtung 605 wird in die Steuereinheit 603 eingegeben. Mittels der durch die Messeinrichtung gemessenen Drehzahl, kann die Ansteuerung bzw. Regelung des Motors weiter verbessert werden.

Wird z.B. ein zähes Lebensmittel wie Teig, Hönig oder dicke Suppen verarbeitet, ist das Anlaufdrehmoment des Motors sehr hoch, sodass eine hohe Spannung eingestellt werden muss, um ein Anlaufen des Geräts zu ermöglichen. Das benötigte Drehmoment nimmt jedoch schlagartig ab, was zu einem starken Anstieg der Drehzahl führt, wenn der Betätigungsweg des zweiten Betätigungselements beibehalten wird. Im Falle von zähen Lebensmitteln ist es für den Benutzer nahezu unmöglich, den Betätigungsweg des zweiten Betätigungselements entsprechend schnell anzupassen, um eine konstante Drehzahl zu erhalten. Dies ist insbesondere nachteilhaft, wenn zur Verarbeitung des Lebensmittels eine niedrige Drehzahl benötigt wird, da die schlagartig ansteigende Drehzahl zu einem Überschreiten der optimalen Drehzahl führt und das Verarbeitungsergebnis verschlechtert wird.

Dieses Problem wird durch die Bereitstellung der Messeinrichtung 605 gelöst, da eine Steuerung der (gemessenen) Ist-Drehzahl auf eine gewünschte (Soll-Drehzahl) erfolgen kann.

Die in den Figuren 2 bis 5 dargestellten Ansteuerwerte, wie auch die Minimal- und Maximalwerte, sind in dieser Ausführungsform (Soll-) Drehzahlen. Die Diagramme und die dazugehörigen Ansteuermodi geben entsprechend einen Zusammenhang zwischen dem Betätigungsweg des zweiten Betätigungselements und einer Soll-Drehzahl wieder.

Nach Bestimmung der gewünschten Solldrehzahl als Ansteuerwert über den ausgewählten Modus und den Betätigungsweg des zweiten Betätigungselements, wird diese bestimmte Soll-Drehzahl (Ansteuerwert) mit der aktuellen Ist-Drehzahl verglichen, welche durch die Messeinrichtung ausgegeben wird. Die Steuereinheit nimmt eine entsprechende Regelung der auszugebenen Spannung vor, um die Ist-Drehzahl an die Soll-Drehzahl anzupassen.

Entsprechend wird, bei einer zu geringen Ist-Drehzahl das an den Motor auszugebende Motoransteuersignal derart gewählt, dass sich die Motordrehzahl erhöht.
Beispielhaft kann die an den Motor anzulegende Spannung höher als die aktuell angelegte Spannung bestimmt und der Motor entsprechend angesteuert bzw. eine entsprechende Spannung an den Motor angelegt werden.

Mittels dieses Regelkreises findet bevorzugt eine konstante Überprüfung der Ist-Drehzahl mit der Soll-Drehzahl statt, um eine Anpassung der Ist-Drehzahl an die Soll-Drehzahl durchzuführen.

Folglich wird bei einer Änderung der Drehzahl durch eine Änderung der Last an den Messern des Stabmixers z.B. durch eine Zerkleinerung des zu zerkleinernden Gutes, eine Erhöhung der Drehzahl verhindert, da mittels des Regelkreises eine konstante Überprüfung der Ist-Drehzahl und einer Nachregelung des an den Motor auszugebenden Motoransteuersignal stattfindet.

Entsprechend wird mit dem Vorsehen einer Messeinrichtung in der zweiten Ausführungsform die Ansteuerung bzw. Regelung des Motors und das dadurch erzielte Verarbeitungsergebnis weiter verbessert und es wird eine konstante Motorgeschwindigkeit auch bei einer Änderung der Last erreicht.

In den vorliegenden Ausführungsformen wurde die Steuereinheit derart beschrieben, dass sie ein Motoransteuersignal bestimmt und ausgibt.

Die Ausgabe eines Motoransteuersignals an den Motor umfasst hierbei auch die Ausgabe eines geeigneten Steuersignals an weitere zwischenliegende Komponenten, wie z.B. eine Schalteinrichtung wie einen Triac, Mosfet, IGBT oder Transistor, welche der Ausgabe der notwendigen Leistung oder Spannung an den Motor dient.

Dem Fachmann sind somit verschiedenste Möglichkeiten der Ausbildung des Motoransteuersignal bekannt, wie z.B. als Steuersignal oder auch als an den Motor anzulegende Spannung. Wie für den Fachmann weiter ersichtlich, kann das Steuersignal der zweiten Betätigungseinrichtung entweder ein analoges oder ein digitales Signal sein, welches durch die Steuereinheit verarbeitet wird.

Dem Fachmann sind verschiedene Arten der Ausgestaltung der zweiten Betätigungseinrichtung bekannt, welche ein analoges oder digitales Signal entsprechend einem Betätigungsweg bzw. einer Position entlang eines Betätigungsweges, einer Eindrücktiefe eines Tasters, eines Schiebewegs eines Schiebeschalters oder einer Druckkraft auf das Betätigungselement ausgibt.

Die Steuereinheit kann z.B. als Mikrocontroller ausgebildet sein.

Auch eine beliebige Kombination der in den Ansprüchen genannten Merkmale ist umfasst.

Das handgehaltene elektrisch angetriebene Haushaltsgerät ist nicht auf den genannten Stabmixer beschränkt, sondern kann auch z.B. andere handgehaltene Küchengeräte, wie z.B. ein Handrührgerät, umfassen.

### Gewerbliche Anwendbarkeit

Das handgehaltene elektrische angetriebene Haushaltsgerät, wie z.B. ein Stabmixer, kann zur Verarbeitung von Lebensmitteln eingesetzt werden.

## Patentansprüche

1. Handgehaltenes elektrisch angetriebenes Haushaltsgerät (100, 600), umfassend:
einen elektrischen Motor (104, 604) zum Antreiben des Haushaltsgeräts;
eine Steuereinheit (103, 603) zur Steuerung des Motors;
ein erstes Betätigungselement (101, 601) zur Ausgabe, an die Steuereinheit, eines ersten Steuersignals; und
ein zweites Betätigungselement (102, 602) zur Ausgabe, an die Steuereinheit, eines zweiten Steuersignals, das von einem Betätigungsweg des zweiten Betätigungselements (102; 602) abhängig ist; **gekennzeichnet dadurch, daß** das erste Betätigungselement (101) dazu eingerichtet ist, das erste Steuersignal zum Auswählen eines Motoransteuermodus an die Steuereinheit (103) auszugeben;
die Steuereinheit (103, 603) eingerichtet ist, basierend auf dem ersten Steuersignal den Motoransteuermodus aus vorgegebenen, verschiedene Ansteuerprofile definierenden Motoransteuermodi auszuwählen, und
die Steuereinheit (103, 603) eingerichtet ist, ein an den Motor auszugebendes Motoransteuersignal basierend auf dem ausgewählten Motoransteuermodus und dem zweiten Steuersignal zu bestimmen, wobei
die vorgegebenen Motoransteuermodi zumindest zwei Motoransteuermodi umfassen von:
- einem ersten Motoransteuermodus mit einem ersten Maximal-Ansteuerwert zur Ansteuerung des elektrischen Motors, wobei die Steuereinheit (103, 603) eingerichtet ist, das an den Motor (104, 604) auszugebende Motoransteuersignal basierend auf dem zweiten Steuersignal und dem ersten Maximal-Ansteuerwert zu bestimmen;
- einem zweiten Motoransteuermodus mit einem zweiten Maximal-Ansteuerwert zur Ansteuerung des elektrischen Motors, verschieden von dem ersten Maximal-Ansteuerwert, wobei die Steuereinheit (103, 603) eingerichtet ist, das an den Motor (104, 604) auszugebende Motoransteuersignal basierend auf dem zweiten Steuersignal und dem zweiten Maximal-Ansteuerwert zu bestimmen;
- einem ersten Pulsmodus mit einer ersten Pulsform des Ansteuersignals zur Ansteuerung des elektrischen Motors (104, 604), wobei die Steuereinheit (103, 604) eingerichtet ist, das an den Motor auszugebende Motoransteuersignal basierend auf dem zweiten Steuersignal und der ersten Pulsform zu bestimmen.

2. Handgehaltenes elektrisch angetriebenes Haushaltsgerät (100, 600) nach Anspruch 1, wobei
der Maximal-Ansteuerwert eine maximal anzulegende Spannung, ein Maximaldrehmoment oder eine Maximaldrehzahl des Motors (104, 604) ist.

3. Handgehaltenes elektrisch angetriebenes Haushaltsgerät (100, 600) nach Anspruch 1 oder 2, wobei
die Steuereinheit (103, 603) eingerichtet ist, im Pulsmodus
- die Pulsbreite in Abhängigkeit vom Betätigungsweg des zweiten Betätigungselements (102, 602) zu regeln;
- zwischen einem Auszustand und einer Ansteuerung mit der Pulsform entsprechend der Betätigung des zweiten Betätigungselements (102, 602) zu schalten;
- eine Amplitude der Pulsform in Abhängigkeit vom Betätigungsweg des zweiten Betätigungselements (102, 602) zu regeln;
- eine Frequenz der Pulsform in Abhängigkeit vom Betätigungsweg des zweiten Betätigungselements (102, 602) zu regeln;
- das Pulsverhältnisses, On/Off, der Pulsform in Abhängigkeit vom Betätigungsweg des zweiten Betätigungselements (102, 602) zu regeln; oder
- eine Kombination hieraus entsprechend des Betätigungsweges zu regeln.

4. Handgehaltenes elektrisch angetriebenes Haushaltsgerät (100, 600) nach einem der Ansprüche 1 bis 3, wobei
die Pulsform des Pulsmodus eines ist von:
- einem Sägezahnpuls;
- einem Sinuspuls;
- einem Rechteckpuls;
- einem Trapezpuls;
- einer beliebigen Pulsform.

5. Handgehaltenes elektrisch angetriebenes Haushaltsgerät (100, 600) nach einem der Ansprüche 1 bis 4, wobei im ersten bzw. zweiten Motoransteuermodus ein Zusammenhang zwischen dem zweiten Steuersignal und einem Ansteuerwert zwischen einem Minimalwert und dem ersten bzw. zweiten Maximalwert einer ist von:
- einem linearen Zusammenhang;
- einem exponentiellen Zusammenhang;
- einem stufenartigen Zusammenhang;
- einem beliebig kurvenförmigen Zusammenhang.

6. Handgehaltenes elektrisch angetriebenes Haushaltsgerät (600) nach einem der vorangegangenen Ansprüche, ferner umfassend:
eine Messeinrichtung (605) zum Messen der Drehzahl des Motors (604), wobei
die Steuereinheit (603) eingerichtet ist, das an den Motor (604) auszugebende Motoransteuersignal ferner basierend auf der gemessenen Drehzahl des Motors zu bestimmen.

7. Verfahren zum Steuern eines handgehaltenen elektrisch angetriebenen Haushaltsgeräts (100, 600), umfassend die Schritte:
Empfangen eines ersten Steuersignals von einem ersten Betätigungselement (101, 601);
Empfangen eines zweiten Steuersignals von einem zweiten Betätigungselement (102, 602), das von einem Betätigungsweg des zweiten Betätigungselements (102; 602) abhängig ist; **gekennzeichnet durch**
Empfangen des ersten Steuersignals zum Auswählen eines Motoransteuermodus;
Auswählen des Motoransteuermodus aus vorgegebenen, verschiedene Ansteuerprofile definierenden Motoransteuermodi basierend auf dem ersten Steuersignal;
Bestimmen eines an einen elektrischen Motor (104, 604) auszugebenden Motoransteuersignals basierend auf dem ausgewählten Motoransteuermodus und dem zweiten Steuersignal, wobei
die vorgegebenen Motoransteuermodi zumindest zwei Motoransteuermodi umfassen von:
- einem ersten Motoransteuermodus mit einem ersten Maximal- Ansteuerwert zur Ansteuerung des elektrischen Motors (104, 604), wobei im Schritt des Bestimmens das an den Motor auszugebende Motoransteuersignal basierend auf dem zweiten Steuersignal und dem ersten Maximalwert bestimmt wird;
- einem zweiten Motoransteuermodus mit einem zweiten Maximal-Ansteuerwert, verschieden von dem ersten Maximal-Ansteuerwert, zur Ansteuerung des elektrischen Motors (104, 604), wobei im Schritt des Bestimmens das an den Motor auszugebende Motoransteuersignal basierend auf dem zweiten Steuersignal und dem zweiten Maximalwert bestimmt wird;
- einem ersten Pulsmodus mit einer ersten Pulsform des Ansteuersignals zur Ansteuerung des elektrischen Motors (104), wobei im Schritt des Bestimmens das an den Motor auszugebende Motoransteuersignal basierend auf dem zweiten Steuersignal und der ersten Pulsform bestimmt wird.

8. Verfahren nach Anspruch 7, wobei
der Maximal-Ansteuerwert eine maximal anzulegende Spannung, eine Maximaldrehzahl oder ein Maximaldrehmoment des Motors (104, 604) ist.

9. Verfahren nach Anspruch 7 oder 8, wobei im Pulsmodus
- die Pulsbreite in Abhängigkeit vom Betätigungsweg des zweiten Betätigungselements (102) geregelt wird;
- zwischen einem Auszustand und einer Ansteuerung mit der Pulsform entsprechend der Betätigung des zweiten Betätigungselements (102, 602) geschaltet wird;
- eine Amplitude der Pulsform in Abhängigkeit vom Betätigungsweg des zweiten Betätigungselements (102, 602) geregelt wird;
- eine Frequenz der Pulsform in Abhängigkeit vom Betätigungsweg des zweiten Betätigungselements (102, 602) geregelt wird;
- das Pulsverhältnisses, On/Off, der Pulsform in Abhängigkeit vom Betätigungsweg des zweiten Betätigungselements (102, 602) geregelt wird; oder
- eine Kombination hieraus entsprechend des Betätigungsweges geregelt wird.

10. Verfahren nach einem der Ansprüche 7 bis 9, wobei
die Pulsform des Pulsmodus eines ist von:
- einem Sägezahnpuls;
- einem Sinuspuls;
- einem Rechteckpuls;
- einem Trapezpuls
- einer beliebigen Pulsform.

11. Verfahren nach einem der Ansprüche 7 bis 10, wobei
im ersten und zweiten Motoransteuermodus ein Zusammenhang zwischen dem zweiten Steuersignal und dem Verlauf zwischen einem Minimalwert und dem ersten bzw. zweiten Maximalwert einer ist von:
- einem linearen Zusammenhang;
- einem exponentiellen Zusammenhang;
- einem stufenartigen Zusammenhang;
- einem beliebig kurvenförmigen Zusammenhang.

12. Verfahren nach einem der Ansprüche 7 bis 11, ferner umfassend den Schritt:
Messen, durch eine Messeinrichtung (605), der Drehzahl des Motors (604), wobei
im Schritt des Bestimmens, das an den Motor auszugebende Motoransteuersignal ferner basierend auf der gemessenen Drehzahl des Motors bestimmt wird.

## Claims

1. Hand-held electrically driven domestic appliance (100, 600), comprising:
an electrical motor (104, 604) for driving the domestic appliance;
a control unit (103, 603) for controlling the motor;
a first operating element (101, 601) for outputting to the control unit a first control signal and a second operating element (102, 602) for outputting to the control unit a second control signal which is dependent on an operating travel of the second operating element (102; 602); **characterised in that** the first operating element (101) is configured to output the first control signal to the control unit (103) in order to select a motor actuating mode;
the control unit (103, 603) is configured to select the motor actuating mode from specified motor actuating modes defining different actuation profiles, based on the first control signal, and
the control unit (103, 603) is configured to determine a motor actuating signal to be output to the motor based on the selected motor actuating mode and the second control signal, wherein the specified motor actuating modes comprise at least two of the following motor actuating modes:
- a first motor actuating mode with a first maximum actuation value for actuating the electrical motor, wherein the control unit (103, 603) is configured to determine the motor actuating signal to be output to the motor (104, 604) based on the second control signal and the first maximum actuation value;
- a second motor actuating mode with a second maximum actuation value for actuating the electrical motor, different from the first maximum actuation value, wherein the control unit (103, 603) is configured to determine the motor actuating signal to be output to the motor (104, 604) based on the second control signal and the second maximum actuation value;
- a first pulse mode with a first pulse form of the actuating signal for actuating the electrical motor (104, 604), wherein the control unit (103, 604) is configured to determine the motor actuating signal to be output to the motor based on the second control signal and the first pulse form.

2. Hand-held electrically driven domestic appliance (100, 600) according to claim 1, wherein
the maximum actuation value is a maximum voltage to be applied, a maximum torque or a maximum rotational speed of the motor (104, 604).

3. Hand-held electrically driven domestic appliance (100, 600) according to claim 1 or 2, wherein
the control unit (103, 603) is configured, in the pulse mode, to
- regulate the pulse width depending on the operating travel of the second operating element (102, 602);
- switch between an "off" state and an actuation with the pulse form corresponding to the operation of the second operating element (102, 602);
- regulate an amplitude of the pulse form depending on the operating travel of the second operating element (102, 602) ;
- regulate a frequency of the pulse form depending on the operating travel of the second operating element (102, 602) ;
- regulate the on/off pulse ratio of the pulse form depending on the operating travel of the second operating element (102, 602); or
- regulate a combination thereof according to the operating travel.

4. Hand-held electrically driven domestic appliance (100, 600) according to one of the claims 1 to 3, wherein the pulse form of the pulse mode is one of:
- a sawtooth pulse;
- a sine pulse;
- a rectangular pulse;
- a trapezoidal pulse;
- any pulse form.

5. Hand-held electrically driven domestic appliance (100, 600) according to one of the claims 1 to 4, wherein
in the first or second motor actuating mode a relationship between the second control signal and an actuation value between a minimum value and the first or second maximum value is one of:
- a linear relationship;
- an exponential relationship;
- a step-like relationship;
- any curve-formed relationship.

6. Hand-held electrically driven domestic appliance (600) according to one of the preceding claims, further comprising:
a measuring device (605) for measuring the rotational speed of the motor (604), wherein
the control unit (603) is configured to determine the motor actuating signal to be output to the motor (604) further based on the measured rotational speed of the motor.

7. Method for controlling a hand-held electrically driven domestic appliance (100, 600), comprising the steps:
receiving a first control signal from a first operating element (101, 601);
receiving a second control signal from a second operating element (102, 602) which is dependent on an operating travel of the second operating element (102; 602); **characterised by**
receiving the first control signal in order to select a motor actuating mode;
selecting the motor actuating mode from specified motor actuating modes defining different actuation profiles, based on the first control signal;
determining a motor actuating signal to be output to an electrical motor (104, 604) based on the selected motor actuating mode and the second control signal, wherein
the specified motor actuating modes comprise at least two of the following motor actuating modes:
- a first motor actuating mode with a first maximum actuation value for actuating the electrical motor (104, 604), wherein, in the determining step, the motor actuating signal to be output to the motor is determined based on the second control signal and the first maximum value;
- a second motor actuating mode with a second maximum actuation value, different from the first maximum actuation value, for actuating the electrical motor (104, 604), wherein, in the determining step, the motor actuating signal to be output to the motor is determined based on the second control signal and the second maximum value;
- a first pulse mode with a first pulse form of the actuating signal for actuating the electrical motor (104), wherein, in the determining step, the motor actuating signal to be output to the motor is determined based on the second control signal and the first pulse form.

8. Method according to claim 7, wherein
the maximum actuation value is a maximum voltage to be applied, a maximum rotational speed or a maximum torque of the motor (104, 604).

9. Method according to claim 7 or 8, wherein,
in the pulse mode
- the pulse width is regulated depending on the operating travel of the second operating element (102);
- switching between an "off" state and an actuation with the pulse form corresponding to the operation of the second operating element (102, 602) takes place;
- an amplitude of the pulse form is regulated depending on the operating travel of the second operating element (102, 602);
- a frequency of the pulse form is regulated depending on the operating travel of the second operating element (102, 602);
- the on/off pulse ratio of the pulse form is regulated depending on the operating travel of the second operating element (102, 602); or
- a combination thereof is regulated according to the operating travel.

10. Method according to one of the claims 7 to 9, wherein
the pulse form of the pulse mode is one of:
- a sawtooth pulse;
- a sine pulse;
- a rectangular pulse;
- a trapezoidal pulse
- any pulse form.

11. Method according to one of the claims 7 to 10, wherein
in the first and second motor actuating mode, a relationship between the second control signal and the progression between a minimum value and the first or second maximum value is one of:
- a linear relationship;
- an exponential relationship;
- a step-like relationship;
- any curve-formed relationship.

12. Method according to one of the claims 7 to 11, further comprising the step:
measuring the rotational speed of the motor (604) by means of a measuring device (605), wherein
in the determining step, the motor actuating signal to be output to the motor is further determined based on the measured rotational speed of the motor.

## Revendications

1. Appareil électroménager portatif (100, 600) comprenant :
un moteur électrique (104, 604) pour entraîner l'appareil ménager ;
une unité de commande (103, 603) pour la commande du moteur ;
un premier élément d'actionnement (101, 601) pour émettre un premier signal de commande à l'unité de commande ; et
un second élément d'actionnement (102, 602) pour émettre à l'unité de commande un second signal de commande qui dépend d'une course d'actionnement du second élément d'actionnement (102 ; 602) ; **caractérisé en ce que** le premier élément d'actionnement (101) est configuré pour émettre le premier signal de commande à l'unité de commande (103) pour sélectionner un mode de commande de moteur ;
l'unité de commande (103, 603) est configurée pour sélectionner le mode de commande de moteur parmi des modes de commande de moteur prédéterminés définissant différents profils de commande sur la base du premier signal de commande, et
l'unité de commande (103, 603) est configurée pour déterminer un signal de commande de moteur à émettre au moteur sur la base du mode de commande de moteur sélectionné et du second signal de commande, dans lequel les modes de commande de moteur prédéterminés comprennent au moins deux modes de commande de moteur :
- d'un premier mode de commande de moteur avec une première valeur de commande maximale pour la commande du moteur électrique, dans lequel l'unité de commande (103, 603) est configurée pour déterminer le signal de commande de moteur à émettre au moteur (104, 604) sur la base du second signal de commande et de la première valeur de commande maximale ;
- d'un second mode de commande de moteur avec une seconde valeur de commande maximale pour la commande du moteur électrique, différente de la première valeur de commande maximale, dans lequel l'unité de commande (103, 603) est configurée pour déterminer le signal de commande de moteur à émettre au moteur (104, 604) sur la base du second signal de commande et de la seconde valeur de commande maximale ;
- d'un premier mode d'impulsion avec une première forme d'impulsion du signal de commande pour la commande du moteur électrique (104, 604), dans lequel l'unité de commande (103, 604) est configurée pour déterminer le signal de commande de moteur à émettre au moteur sur la base du second signal de commande et de la première forme d'impulsion.

2. Appareil électroménager portatif (100, 600) selon la revendication 1, dans lequel
la valeur de commande maximale est une tension maximale à appliquer, un couple maximal ou un régime maximal du moteur (104, 604).

3. Appareil électroménager portatif (100, 600) selon la revendication 1 ou 2, dans lequel l'unité de commande (103, 603) est configurée pour, dans le mode d'impulsion,
- réguler la largeur d'impulsion en fonction de la course d'actionnement du second élément d'actionnement (102, 602) ;
- commuter entre un état d'arrêt et une commande avec la forme d'impulsion correspondant à l'actionnement du second élément d'actionnement (102, 602) ;
- réguler une amplitude de la forme d'impulsion en fonction de la course d'actionnement du second élément d'actionnement (102, 602) ;
- réguler une fréquence de la forme d'impulsion en fonction de la course d'actionnement du second élément d'actionnement (102, 602) ;
- contrôler le rapport d'impulsion, On/Off, de la forme d'impulsion en fonction de la course d'actionnement du second élément d'actionnement (102, 602) ; ou
- réguler une combinaison de ceux-ci en fonction de la course d'actionnement.

4. Appareil électroménager portatif (100, 600) selon l'une quelconque des revendications 1 à 3, dans lequel la forme d'impulsion du mode d'impulsion est l'une :
- d'une impulsion en dents de scie ;
- d'une impulsion sinusoïdale ;
- d'une impulsion rectangulaire ;
- d'une impulsion trapézoïdale ;
- d'une forme d'impulsion quelconque.

5. Appareil électroménager portatif (100, 600) selon l'une quelconque des revendications 1 à 4, dans lequel, dans le premier ou le second mode de commande de moteur, un rapport entre le second signal de commande et une valeur de commande entre une valeur minimale et la première ou la seconde valeur maximale est l'un :
- d'un rapport linéaire ;
- d'un rapport exponentiel ;
- d'un rapport échelonné ;
- d'un rapport curvilinéaire quelconque.

6. Appareil électroménager portatif (600) selon l'une quelconque des revendications précédentes, comprenant en outre :
un dispositif de mesure (605) pour mesurer le régime du moteur (604), dans lequel
l'unité de commande (603) est configurée pour déterminer en outre le signal de commande de moteur à émettre au moteur (604) sur la base du régime mesuré du moteur.

7. Procédé de commande d'un appareil électroménager portatif (100, 600), comprenant les étapes consistant à :
recevoir un premier signal de commande d'un premier élément d'actionnement (101, 601) ;
recevoir un second signal de commande d'un second élément d'actionnement (102, 602) qui dépend d'une course d'actionnement du second élément d'actionnement (102 ; 602) ; **caractérisé par** les étapes consistant à
recevoir le premier signal de commande pour sélectionner un mode de commande de moteur ;
sélectionner le mode de commande de moteur parmi des modes de commande de moteur prédéterminés définissant différents profils de commande sur la base du premier signal de commande ;
déterminer un signal de commande de moteur à émettre à un moteur électrique (104, 604) sur la base du mode de commande de moteur de moteur sélectionné et du second signal de commande, dans lequel
les modes de commande de moteur prédéterminés comprennent au moins deux modes de commande de moteur :
- d'un premier mode de commande de moteur avec une première valeur de commande maximale pour commander le moteur électrique (104, 604), dans lequel, à l'étape de détermination, le signal de commande de moteur à émettre au moteur est déterminé sur la base du second signal de commande et de la première valeur maximale ;
- d'un second mode de commande de moteur avec une seconde valeur de commande maximale, différente de la première valeur de commande maximale pour commander le moteur électrique (104, 604), dans lequel, à l'étape de détermination, le signal de commande de moteur à émettre au moteur est déterminé sur la base du second signal de commande et de la seconde valeur maximale ;
- d'un premier mode d'impulsion avec une première forme d'impulsion du signal de commande pour commander le moteur électrique (104), dans lequel, à l'étape de détermination, le signal de commande de moteur à émettre au moteur est déterminé sur la base du second signal de commande et de la première forme d'impulsion ;

8. Procédé selon la revendication 7, dans lequel
la valeur de commande maximale est une tension maximale à appliquer, un régime maximal ou un couple maximal du moteur (104, 604).

9. Procédé selon la revendication 7 ou 8, dans lequel, dans le mode d'impulsion,
- la largeur d'impulsion est régulée en fonction de la course d'actionnement du second élément d'actionnement (102) ;
- une commutation est réalisée entre un état d'arrêt et une commande avec une forme d'impulsion correspondant à l'actionnement du second élément d'actionnement (102, 602) ;
- une amplitude de la forme d'impulsion est régulée en fonction de la course d'actionnement du second élément d'actionnement (102, 602) ;
- une fréquence de la forme d'impulsion est régulée en fonction de la course d'actionnement du second élément d'actionnement (102, 602) ;
- le rapport d'impulsion, On/Off, de la forme d'impulsion est régulé en fonction de la course d'actionnement du second élément d'actionnement (102, 602) ; ou
- une combinaison de ceux-ci est régulée en fonction de la course d'actionnement.

10. Procédé selon l'une quelconque des revendications 7 à 9, dans lequel la forme d'impulsion du mode d'impulsion est l'une :
- d'une impulsion en dents de scie ;
- d'une impulsion sinusoïdale ;
- d'une impulsion rectangulaire ;
- d'une impulsion trapézoïdale ;
- d'une forme d'impulsion quelconque.

11. Procédé selon l'une quelconque des revendications 7 à 10, dans lequel, dans le premier et le second mode de commande de moteur, un rapport entre le second signal de commande et le tracé entre une valeur minimale et la première ou la seconde valeur maximale est l'un :
- d'un rapport linéaire ;
- d'un rapport exponentiel ;
- d'un rapport échelonné ;
- d'un rapport curvilinéaire quelconque.

12. Procédé selon l'une quelconque des revendications 7 à 11, comprenant en outre l'étape consistant à :
mesurer, par un dispositif de mesure (605), le régime du moteur (604), dans lequel
à l'étape de détermination, le signal de commande de moteur à émettre au moteur est en outre déterminé sur la base du régime mesuré du moteur.
